(19) Europäisches Patentamt
European Patent Office
Office européen des brevets

(11) **EP 1 939 872 A2**

## (12) EUROPEAN PATENT APPLICATION

(43) Date of publication:
**02.07.2008 Bulletin 2008/27**

(51) Int Cl.:
***G11B 7/24*** *(2006.01)*

(21) Application number: **07150023.5**

(22) Date of filing: **14.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **26.12.2006 JP 2006350272**

(71) Applicant: **Kabushiki Kaisha Toshiba**
**Minato-ku,**
**Tokyo 105-8001 (JP)**

(72) Inventors:
 • **Yusu, Keiichiro**
 **c/o Toshiba Corp.**
 **Intellectual Property Division**
 **Tokyo 105-8001 (JP)**

 • **Nakamura, Naomasa**
 **c/o Toshiba Corp.**
 **Intellectual Property Division**
 **Tokyo 105-8001 (JP)**
 • **Yoshida, Nobuhisa**
 **c/o Toshiba Corp.**
 **Intellectual Property Division**
 **Tokyo 105-8001 (JP)**
 • **Ootera, Yasuaki**
 **c/o Toshiba Corp.**
 **Intellectual Property Division**
 **Tokyo 105-8001 (JP)**

(74) Representative: **Henkel, Feiler & Hänzel**
 **Patentanwälte**
 **Maximiliansplatz 21**
 **80333 München (DE)**

### (54) Optical disc and optical disc device

(57) An optical disc (100) is provided which realizes desired optical properties, which has a transmissive reflection layer causing no deformation and the like of minute convex pits, and which can realize superior reproduction properties even when high density recording is performed. The above optical disc has at least three information layers (41a,12a,43a) independent with respect to a light incident surface, and a reflection layer (13) formed on an information layer other than the layers most close to and most far from the light incident surface has a thickness of 5 to 20 nm and has a refractive index of 3.0 or more and an extinction coefficient of 0.6 or less with respect to the wavelength of incident laser light. This reflection layer is preferably composed of at least one material selected from the group consisting of Si, a SiCr alloy, a SiNb alloy, a SiW alloy, and SiC.

**EP 1 939 872 A2**

**Description**

**BACKGROUND**

1. Field

The present invention relates to an optical disc and an optical disc device reproducing the same, and more particularly relates to a one-sided multilayer type optical disc and an optical disc device reproducing the same.

2. Description of the Related Art

In a reproduction-only optical disc, concaves and convexes, which are called pits, are formed beforehand on an information layer so as to record data. In reproduction, the information layer is irradiated with laser light, and in accordance with the intensity of reflected light from the pits, the recorded data is reproduced.

In order to increase the recording density of an optical disc, for example, a method for decreasing the wavelength of laser light used for recording and reproducing and/or a method for increasing NA of an object lens has been used.

In addition, a multilayer formation technique has also been used in which the recording capacity per one light incident surface is increased by forming a plurality of information layers in one optical disc.

In a multilayer optical disc, since recorded data of a target information layer is reproduced by passing light through other information layers provided thereon, all the information layers except the layer located most far from the light incident surface must have light transmission property. Since the data of the layers is reproduced by reflection of incident light, reflection layers formed on the information layers each must have a detectable reflectance besides the light transmission property. As a material for the reflection layer, heretofore, for example, A1, Ag, or a compound thereof has been used as disclosed in JP-A 2002-251801.

However, concomitant with an increased recording density of an optical disc, requirements for the optical properties, such as the light transmission property and the reflectivity, of the reflection layer have become very severe, and as a result, material design to satisfy all the requirements described above have also become very difficult.

In addition, there has been a problem in a method for manufacturing a multilayer optical disc, which must be overcome. In order to simultaneously satisfy the above light transmission property and the reflectivity, the thickness of the reflection film is generally decreased, and hence, as a result, it tends to be difficult to control the thickness of the reflection layer during the manufacturing process.

For example, a total-reflection film made of an Al alloy having a thickness of 100 nm has a constant reflectance even though the thickness thereof slightly varies, and the transmission coefficient can be maintained zero. However, when a thin light transmissive reflection layer having a thickness of approximately 10 nm is formed to have constant reflectance and transmission coefficient, the thickness control on the order of 1 nm must be performed. Since a film forming rate of an Al alloy which has been generally used for the reflection layer is very high, the thickness control of an Al alloy is very difficult, and as a result, the optical properties thereof are liable to vary.

On the other hand, it has been said that a material primarily composed of a noble metal, such as Ag, is advantageous as compared to an A1 alloy in terms of thickness control; however, also in the case described above, there have been the following problem caused by a method for manufacturing a multilayer optical disc.

In order to form a multilayer optical disc, layers are sequentially formed starting from a layer at the light incident side, and the first layer is obtained by forming a transmissive reflection layer by a sputtering method or the like on a substrate having concave pits formed thereon. However, from the second layer, after convex pits are transferred on a UV curable resin applied on the first layer by pressing a stamper made of a polycarbonate (hereinafter referred to as "PC") having concave pits, a transmissive reflection layer, such as a transmissive reflection layer primarily composed of Ag, is formed. In this case, the convex pits tend to be slightly crushed or deformed since receiving an internal stress of the transmissive reflection layer formed on the convex pits. This phenomenon, which does not occur when the first reflection layer having concave pits is formed, has a serious influence particularly on minute pits such as 2T or 3T.

Hence, when a transmissive reflection layer is formed on any layer other than the first layer, material selection must be carefully performed in consideration of the internal stress besides the optical properties.

**SUMMARY OF THE INVENTION**

Accordingly, the present invention has been conceived in consideration of the above circumstances, and an object of the present invention is to provide an optical disc and an optical disc device reproducing the same, the optical disc realizing desired optical properties, having a transmissive reflection layer causing no deformation and the like of minute convex pits, and being capable of realizing superior reproduction properties even when high density recording is performed.

To achieve the object described above, an optical disc according to an aspect of the present invention is an optical disc which is a multilayer optical disc comprising: at least three information layers independent with respect to a light incident surface, and in the above optical disc, an information layer other than the layers most close to and most far from the light incident surface is provided with a reflection layer thereon which has a thickness of 5 to 20 nm and which has a refractive index of 3.0 or more and an extinction coefficient of 0.6 or less with respect to the wavelength of incident laser light. The reflection layer is preferably composed of at least one material selected from the group consisting of Si, a SiCr alloy, a SiNb alloy, a SiW alloy, and SiC. In addition, as another preferable example, the reflection layer is preferably composed of a composite material containing at least one of Al and Ag and at least one of $SiO_2$, $Al_2O_3$, $Si_3N_4$, and AlN.

Further, an optical disc device according to another aspect of the present invention is an optical disc device reproducing information by irradiating an optical disc with laser light, wherein the optical disc is a multilayer optical disc comprising at least three information layers independent with respect to a light incident surface. In the optical disc device described above, an information layer other than the layers most close to and most far from the light incident surface is provided with a reflection layer thereon which has a thickness of 5 to 20 nm and which has a refractive index of 3.0 or more and an extinction coefficient of 0.6 or less with respect to the wavelength of the laser light.

According to the optical disc and the optical disc device of above aspects of the present invention, desired optical properties are realized, and in addition, a transmissive reflection layer causing no deformation and the like of minute convex pits is provided, and superior reproduction properties can be realized even when high density recording is performed.

## BRIEF DESCRIPTION OF THE DRAWINGS

The accompanying drawings, which are incorporated in and constitute a part of the specification, illustrate embodiments of the invention, and together with the general description given above and the detailed description of the embodiments given below, serve to explain the principles of the invention.

Figs. 1A to 1E are schematic views illustrating a method for manufacturing an optical disc according to an embodiment of the present invention, the views including steps of forming an original board and of injection molding a polycarbonate substrate;

Fig. 2 is a schematic view showing the method for manufacturing an optical disc according to the embodiment of the present invention and also showing the structural thereof;

Fig. 3 is a schematic view showing the structure of an optical disc formed as an example according to an embodiment of the present invention;

Fig. 4 is a table showing physical specifications of the optical disc of the example;

Fig. 5 is a table showing conditions of an evaluation test for the optical disc of the example;

Fig. 6 is a table showing evaluation results of optical discs of a comparative example, which are formed for comparison with an optical disc of the present invention; and

Fig. 7 is a schematic view showing the structure of an optical disc device according to an embodiment of the present invention.

## DETAILED DESCRIPTION

An optical disc and an optical disc device according to embodiments of the present invention will be described with reference to accompanying drawings.

(1) A method for manufacturing an optical disc and the structure thereof

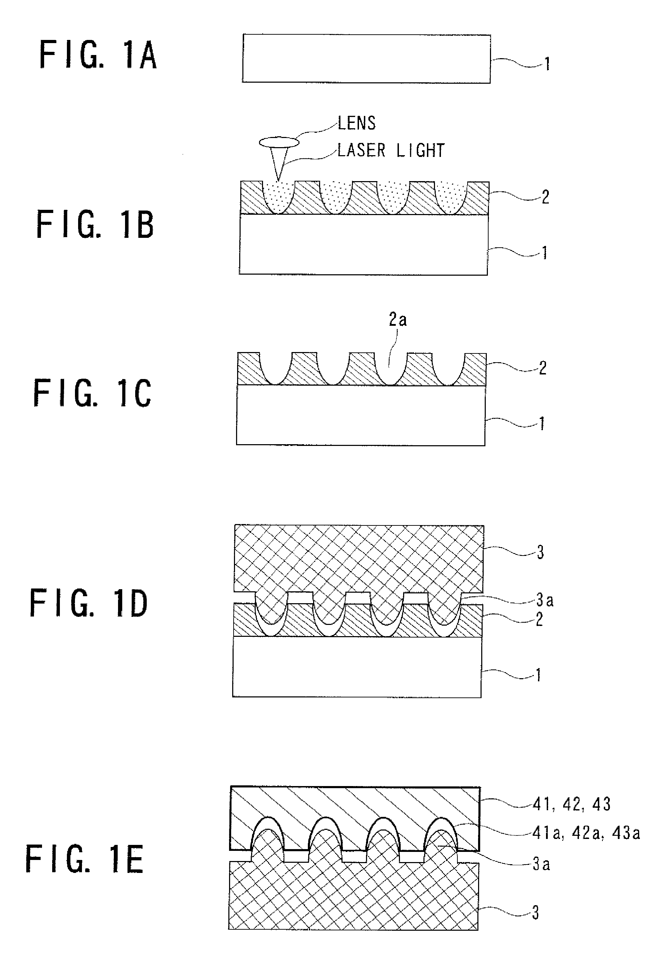

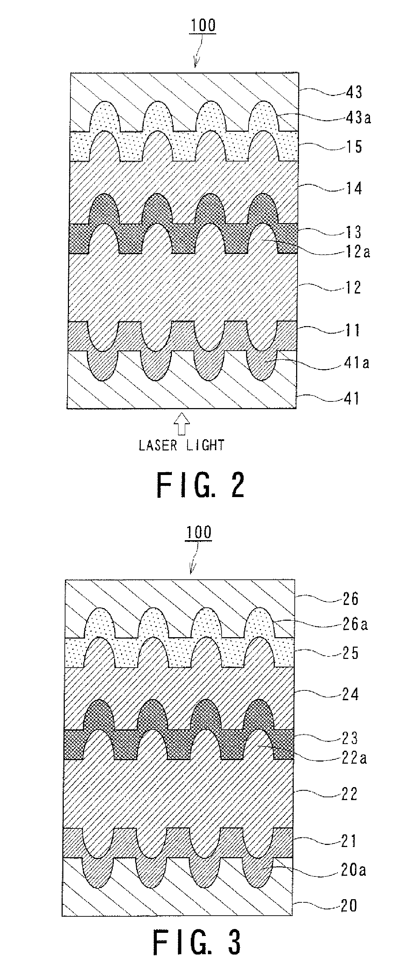

Figs. 1A to 1E and Fig. 2 are schematic views illustrating a method for manufacturing an optical disc 100 according to an embodiment of the present invention and the structure thereof. Although the optical disc 100 is a reproduction-only multilayer optical disc having at least three information layers, in this embodiment, the optical disc 100 having a one-sided three layer structure will be described by way of example.

Figs. 1A to 1E are schematic views showing steps of forming an original board and of injection molding a PC substrate. However, detailed steps, such as surface cleaning, which are performed whenever necessary during the above process, are omitted. In addition, although pit shapes recorded on the three information layers are actually different from each other depending on contents of the information, the pits having the same shape are shown in Figs. 1A to 1E and Fig. 2.

The information to be recorded on each layer is independently recorded on a resist 2 applied on a Si wafer 1 by an exposure apparatus (Figs. 1A and 1B).

The Si wafer 1 thus exposed is immersed in an etching solution, and only exposed portions are dissolved out, thereby forming concave pits 2a (Fig. 1C).

Subsequently, by Ni (nickel) sputtering and a plating treatment, Ni-made stampers 3 having transferred convex pits 3a are formed (Fig. ID). In this step, three types of Ni-made stampers 3 are actually formed for the respective three information layers.

The three types of Ni-made stampers 3 thus formed are sequentially set in an injection molding machine, and PC substrates 41, 42, and 43 are injection molded to have a predetermined thickness (for example, in the case of DVD, 0.6 mm) (Fig. 1E).

In this case, it is assumed that the PC substrates 41, 42, and 43 have information for the first, the second, and the third layers, respectively. Concave pits 41a, 42a, and 43a for the respective layers are transferred on the PC substrates 41, 42, and 43, respectively.

Next, with reference to Fig. 2, steps of forming the one-sided three layer optical disc 100 and the structure thereof will be described. The optical disc 100 shown in Fig. 2 is composed of the first, the second, and the third layers provided in that order from the bottom and is sequentially formed from the first layer to the third layer. In addition, when the optical disc 100 is reproduced, laser light is irradiated from the bottom side.

First, on the PC substrate 41 on which the pits 41a for the first layer are recorded, a reflection layer 11 having a thickness determined by optical design is formed by sputtering, thereby forming the first layer.

Next, after a UV curable resin 12 is applied on the first layer, the PC substrate 42 on which the information for the second layer is recorded is pressed on the UV curable resin 12 so as to transfer the information. For forming the second layer, the PC substrate 42 is not used as a constituent element of the optical disc 100 but is used as a stamper for the UV curable resin 12. Hence, although the information pits 41a of the first layer have a concave shape, the convex pits 12a for the second layer are transferred on the UV curable resin 12.

On the convex pits 12a described above, a reflection layer 13 of the embodiment according to the present invention is formed. That is, the transmissive reflection layer 13 for the second layer (that is, the information layer other than the layers most close to and most far from the light incident layer) is formed by sputtering which has a thickness of 5 to 20 nm and which has a refractive index of 3.0 or more and an extinction coefficient of 0.6 or less with respect to a laser wavelength of a light source. The thickness is determined by optical calculation so as to satisfy necessary reflectance and transmission coefficient.

As a material for the transmissive reflection layer 13, at least one material selected from the group consisting of Si, a SiCr alloy, a SiNb alloy, a SiW alloy, and SiC is preferably used. In addition, a composite material containing at least one of Al and Ag and at least one of $SiO_2$, $Al_2O_3$, $Si_3N_4$, and AlN is also preferably used. In addition, any other material may also be used as long as it has the optical constant described above.

Heretofore, as the material for the transmissive reflection layer, a material primarily composed of Al or Ag has been used. However, since the film forming rate of Al or Ag is fast, the precise thickness control is difficult to perform. On the other hand, the film forming rate of the material for the transmissive reflection layer 13 of the above embodiment is slow as compared to that of Al and Ag, and hence the thickness control can be easily performed.

In addition, a thin film of a material primarily composed of Ag generally has a high internal stress. Hence, when the reflection layer is formed on the resin layer 12 having the convex pits 12a as the second layer using a material primarily composed of Ag, the convex pits 12a disadvantageously tend to be crushed or deformed. In particular, this tendency becomes apparent for small pits such as 2T or 3T.

On the other hand, the material for the transmissive reflection layer 13 of this embodiment has a low internal stress as compared to that of Ag, and the transmissive reflection layer 13 formed of the material described above does not crush nor deform the convex pits 12a transferred on the resin layer 12.

The third layer, which is the last layer, is separately formed by forming a total-reflection layer 15 on the PC substrate 43 which is formed beforehand so as to have the information pits 43a for the third layer. A UV curable resin 14 is applied on the reflection layer 13 formed for the second layer as described above, and the PC substrate 43 and the reflection layer 15, which are formed separately for the third layer, are adhered onto the resin 14 so that the reflection layer 15 is brought into contact therewith.

Accordingly, the one-sided three layer optical disc 100 is formed.

(2) Example 1

The optical disc 100 was actually formed based on the manufacturing steps described above, and the test results of its performance will be described.

Fig. 3 is a view showing the structure of the optical disc 100 manufactured as Example 1 of the present invention.

A reflection layer 21 of $Ag_{98}Pd_1Cu_1$ (the number provided for the atomic symbol indicates an atomic ratio, and hereinafter, the number indicates the same as described above) having a thickness of 17 nm was formed on a 580-$\mu$m thick PC substrate 20 having concave information pits 20a, so that the first layer was formed. The time necessary for this film formation was 3 seconds. On this first layer thus formed, a UV curable resin 22 was applied to have a thickness of 15 μm using with a spin coater, and a PC substrate having information pits for the second layer was pressed on the UV curable resin 22, so that convex pits 22a were transferred on the resin 22. Subsequently, by irradiation of UV light, the UV curable resin 22 was cured.

Next, as a reflection layer 23 of this example, a film having a thickness of 12 nm was formed by a DC magnetron sputtering method using $CrSi_2$ as a raw material. The time necessary for this film formation was 8 seconds.

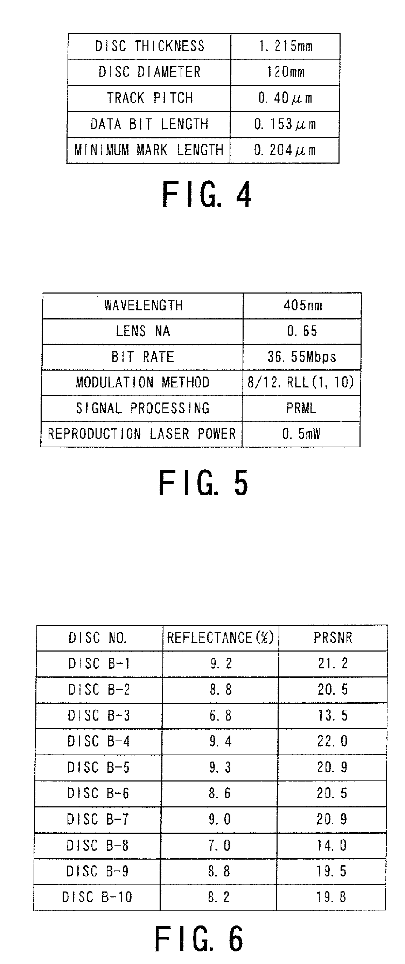

In addition, separately from the steps described above, a reflection layer 25 for the third layer was formed by a DC magnetron sputtering method to have a thickness of 100 nm on a 600-μm thick PC substrate 26 on which information for the third layer was recorded in the form of concave pits 26a. The time necessary for this film formation was 6 seconds. The reflection layer 25 thus formed was adhered to the PC substrate 20 formed beforehand, which was provided with the first layer and the second layer, with a UV curable resin 24 having a thickness of 20 μm interposed therebetween, thereby forming the optical disc 100 as the example. The other physical properties of the example are shown in the table of Fig. 4.

The optical disc 100 thus formed was evaluated under the conditions shown in the table of Fig. 5. As the evaluation index, a PRSNR was used. The PRSNR is an evaluation index for HD DVD standardized by a DVD forum and is an index which can express an S/N ratio of a reproduced signal and which can also simultaneously express an actual reproduced waveform and a theoretical PR waveform linearity. According to the standardization of a reproduction-only HD DVD (HD DVD-ROM), a PRSNR of 15 or more is required.

According to the measurement results of the optical disc 100 thus formed, the PRSNRs of the first, the second, and the third layers were 18, 18, and 21, respectively. All the results satisfied the standardization of 15 or more, and hence the effect of the material for the second layer of this example was apparently confirmed.

(3) Comparative Example 1

As a comparative example with respect to Example 1 of the present invention, a comparative one-sided three layer optical disc was formed which had the same structure as that in Example 1 except that the material for the reflection layer for the second layer was different. One disc A using $Ag_{98}Pd_1Cu_1$ (thickness: 17 nm) and 10 discs B using $Ag_{99}Mo_1$ (thickness: 10 nm) as the material for the reflection layer for the second layer were formed. The discs described above were evaluated under the conditions shown in the table of Fig. 5.

The PNSNRs of the first, the second, and the third layers of the disc A were 18, 10, and 21, respectively, and hence, the second layer could not satisfy the standardization of 15 or more.

In this case, when symmetry S used as an index for the pit shape was obtained, the second layer had a symmetry S of - 0.09, and hence it was found that the value of the second layer was deviated from zero that was an ideal value. The symmetry S is an index represented by the following equation (1).

$$S = ((I2H + I2L)/2 - (I11H + I11L)/2)/(I11H - I11L) \quad \cdots \quad (1)$$

The numerator of the equation (1) indicates the difference in central value of the amplitude between an 11T pit having a largest amplitude among reproduced signals and a 2T pit having a smallest amplitude. In addition, the denominator indicates the amplitude of the 11T pit. As can be seen from the equation (1), when the central value of the reproduced signal of the 11T pit and that of the reproduced signal of the 2T pit coincide with each other, the symmetry S becomes zero, and when the central values described above are deviated from each other, the symmetry S exhibits a value apart from zero.

Accordingly, in the second layer of the disc A, the intensity of the reproduced signal from the 2T pit was decreased, and as a result, it was believed that the central value of the 2T pit signal was deviated from that of the 11T pit signal.

In addition, it was also believed that as the reason for the above, relatively small convex 2T pits were deformed by the internal stress of the $Ag_{98}Pd_1Cu_1$.

Next, the evaluation results of the ten discs B are shown in the table of Fig. 6. The reflectance of the disc B-3 and that of the disc B-8 were low as compared to those of the other discs, and the PRSNRs were also lower than the standardization thereof. In this case, the symmetries S of the 10 discs B were all within ±0.01, and hence it was confirmed that the symmetry S did not cause any problem.

The reason the variation as described above occurred although the 10 discs were formed using the same configuration was the film forming rate of the $Ag_{99}Mo_1$ reflection layer used for the second layer. The time for forming the $Ag_{98}Pd_1Cu_1$ (disc A) having a thickness of 17 nm determined by the optical conditions was 3 seconds; however, the $Ag_{99}Mo_1$ reflection layer having a thickness of 10 nm was formed for only 1.3 seconds. Hence, it was believed that since the variation in thickness was increased by the variation in sputtering time, the reflectance varied thereby, and as a result, the variation in properties occurred.

As described above, it was understood that from the results of the comparative example, even when the optical conditions were satisfied, due to the internal stress and the film forming rate of the thin film, the properties of the optical disc were adversely influenced.

(4) Example 2

The optical disc 100 having the same configuration as that of Example 1 except that $NbSi_2$ (thickness: 15 nm) was used as the material for the second layer was formed as Example 2 of the present invention. The optical disc 100 thus formed was evaluated under the conditions shown in the table of Fig. 5 as was the case described above. The PRSNRs of the first, the second, and the third layers were 19, 19, and 21, respectively, and all satisfied the standardization of 15 or more. Also from the results of Example 2, the effect of the material for the second layer of the present invention was apparently confirmed.

As described above, according to the optical disc 100 of this example, the optical disc 100 having a superior PRSNR, which is used as the evaluation index, can be provided. In addition, the stable optical disc 100 having a large manufacturing margin and high reproducibility can be provided.

(5) Optical disc device

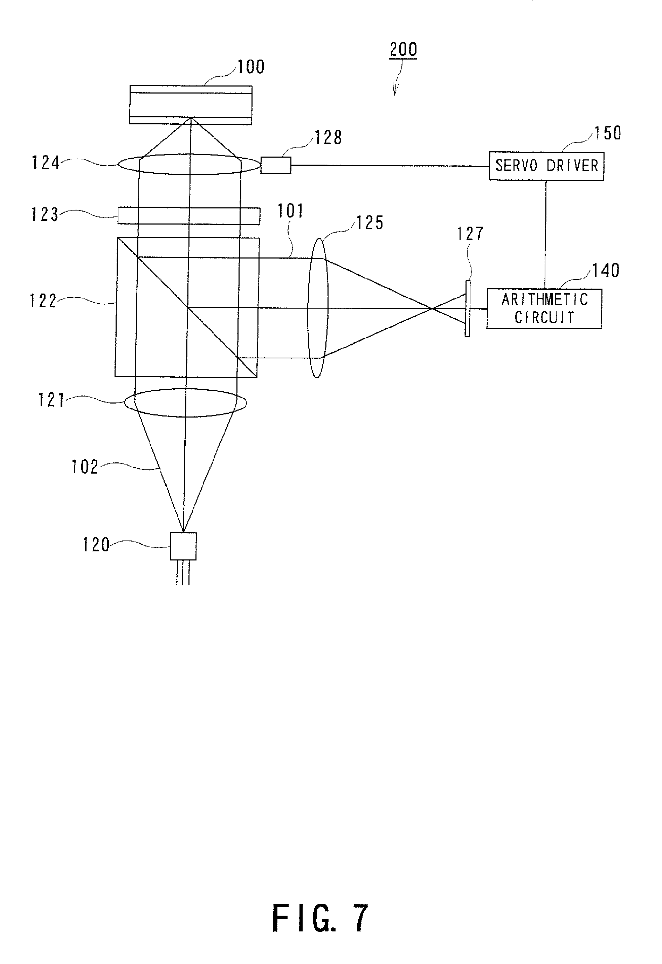

Fig. 7 is a schematic view showing the structure of an optical disc device 200 according to an embodiment of the present invention which reproduces the above one-sided multilayer optical disc 100.

A semiconductor laser light source 120 having a short wavelength is used as a light source. The wavelength of light emitted from the source is, for example, a violet wavelength range from 400 to 410 nm. Light beams 102 emitted from the semiconductor laser light source 120 are made parallel by a collimate lens 121, then pass through a polarized beam splitter 122 and a λ/4 plate 123, and are finally incident on an object lens 124. Subsequently, the beams pass the substrate of the optical disc 100 and then converge on the individual information layers. After reflected light beams 101 by the information layers of the optical disc 100 again pass the substrate of the optical disc 100, then pass the object lens 124 and the λ/4 plate 123, and are then reflected by the polarized beam splitter 122, the light beams 101 pass a condenser lens 125 and are then incident on a light detector 127.

A light receiving portion of the light detector 127 is generally divided into a plurality of light receiving parts, and current in accordance with light intensity is output from each light receiving part. The current thus output is converted into a voltage by an I/V amplifier (current-voltage transformer), which is not shown, and is then input into an arithmetic circuit 140. An input voltage signal is arithmetically processed by the arithmetic circuit 140 into a tilt error signal, an RF signal, a focus error signal, a track error signal, and the like.

The tilt error signal is used for tilt control, the RF signal is used to reproduce information recorded on the optical disc 100, the focus error signal is used for focus control, and the track error signal is used for tracking control.

The object lens 124 can be driven by an actuator 128 in the top-down direction, the disc radial direction, and the tilt direction (radial direction or/and tangential direction) and is controlled by a servo driver 150 so as to follow information tracks on the optical disc 100. In addition, there are two types of tilt directions. That is, there are a "radial tilt" generated when the disc surface tilts toward the center of the optical disc and a "tangential tilt" generated in the tangent line direction of the track. Of those described above, the radial tilt generally occurs in the disc. Besides the tilt generated during disc manufacturing, a tilt generated by long-term use and/or a tilt generated by a rapid change in use environment must also be taken into consideration. By using the optical disc device 200 as described above, the one-sided multilayer optical disc 100 according to the embodiment of the present invention can be reproduced.

However, the present invention is not limited to the embodiments described above, and in an execution phase, the constituent elements may be variously change and modified without departing from the spirit and the scope of the present invention. In addition, by various and appropriate combinations of the constituent elements disclosed in the above embodiments, various changes and modifications may also be made in accordance with the present invention. For example, among all the constituent elements describe in the embodiments, some of them may be omitted. Furthermore, the constituent elements of the different embodiments may be used in combination.

**Claims**

1.  A multilayer optical disc comprising:

    at least three information layers independent with respect to a light incident surface,

wherein an information layer other than the layers most close to and most far from the light incident surface is provided with a reflection layer thereon which has a thickness of 5 to 20 nm and which has a refractive index of 3.0 or more and an extinction coefficient of 0.6 or less with respect to the wavelength of incident laser light.

2. The multilayer optical disc according to Claim 1,
   wherein the reflection layer is composed of at least one material selected from the group consisting of Si, a SiCr alloy, a SiNb alloy, a SiW alloy, and SiC.

3. The multilayer optical disc according to Claim 1,
   wherein the reflection layer is composed of a composite material containing at least one of Al and Ag and at least one of $SiO_2$, $Al_2O_3$, $Si_3N_4$, and AlN.

4. An optical disc device reproducing information by irradiating an optical disc with laser light,
   wherein the optical disc is a multilayer optical disc comprising:

   at least three information layers independent with respect to a light incident surface,

   wherein an information layer other than the layers most close to and most far from the light incident surface is provided with a reflection layer thereon which has a thickness of 5 to 20 nm and which has a refractive index of 3.0 or more and an extinction coefficient of 0.6 or less with respect to the wavelength of the laser light.

5. The optical disc device according to Claim 4,
   wherein the reflection layer is composed of at least one material selected from the group consisting of Si, a SiCr alloy, a SiNb alloy, a SiW alloy, and SiC.

6. The optical disc device according to Claim 4,
   wherein the reflection layer is composed of a composite material containing at least one of Al and Ag and at least one of $SiO_2$, $Al_2O_3$, $Si_3N_4$, and AlN.

FIG. 1A

1

FIG. 1B

LENS
LASER LIGHT

2

1

FIG. 1C

2a

2

1

FIG. 1D

3

3a
2

1

FIG. 1E

41, 42, 43
41a, 42a, 43a
3a

3

FIG. 2

FIG. 3

| DISC THICKNESS | 1. 215mm |
|---|---|
| DISC DIAMETER | 120mm |
| TRACK PITCH | 0. 40μm |
| DATA BIT LENGTH | 0. 153μm |
| MINIMUM MARK LENGTH | 0. 204μm |

## FIG. 4

| WAVELENGTH | 405nm |
|---|---|
| LENS NA | 0. 65 |
| BIT RATE | 36. 55Mbps |
| MODULATION METHOD | 8/12. RLL(1, 10) |
| SIGNAL PROCESSING | PRML |
| REPRODUCTION LASER POWER | 0. 5mW |

## FIG. 5

| DISC NO. | REFLECTANCE (%) | PRSNR |
|---|---|---|
| DISC B-1 | 9. 2 | 21. 2 |
| DISC B-2 | 8. 8 | 20. 5 |
| DISC B-3 | 6. 8 | 13. 5 |
| DISC B-4 | 9. 4 | 22. 0 |
| DISC B-5 | 9. 3 | 20. 9 |
| DISC B-6 | 8. 6 | 20. 5 |
| DISC B-7 | 9. 0 | 20. 9 |
| DISC B-8 | 7. 0 | 14. 0 |
| DISC B-9 | 8. 8 | 19. 5 |
| DISC B-10 | 8. 2 | 19. 8 |

## FIG. 6

200

100

128

124

SERVO DRIVER — 150

123

101

125

127

122

ARITHMETIC CIRCUIT — 140

121

102

120

# FIG. 7

11

**EP 1 939 872 A2**

**REFERENCES CITED IN THE DESCRIPTION**

**Patent documents cited in the description**

- JP 2002251801 A